# EUROPEAN PATENT APPLICATION

(11) **EP 4 831 429 A1**
(43) Date of publication of application: **28.10.2026**
(21) Application number: 25821076.4
(22) Date of filing: 26.05.2025
(51) Int. Cl.: E05B 77/12, E05B 81/64, B60R 21/013

(54) **VEHICLE COLLISION UNLOCKING SYSTEM AND METHOD, AND VEHICLE**

(30) Priority: 13.06.2024 CN 202410763115
(71) Applicant: Chongqing Changan Technology Co., Ltd., Chongqing 401135 (CN)
(72) Inventor: ZHU, Tao, Chongqing 401135 (CN); LIU, Yang, Chongqing 401135 (CN); YI, Xiangtong, Chongqing 401135 (CN)
(74) Representative: Håmsø Patentbyrå AS
(86) International application number: PCT/CN2025/097284
(87) International publication number: WO 2025/256400

(57) **Abstract**

Embodiments of the present application provide a vehicle collision unlocking system and method, and a vehicle. The vehicle collision unlocking system comprises a collision detection unit, a plurality of domain controllers, and a plurality of door lock mechanisms; the collision detection unit is connected to any one of the plurality of domain controllers by means of at least two lines; and any one of the plurality of domain controllers is connected to at least one door lock mechanism. In this way, since the collision detection unit is connected to any one of the plurality of domain controllers by means of the at least two lines, upon acquiring a collision signal, the collision detection unit can send, by means of the at least two lines having different communication modes, the collision signal to the domain controller connected thereto, thereby realizing redundant transmission of the collision signal, improving the possibility of the domain controller receiving the collision signal, ensuring the safety of the vehicle. Additionally, since the collision detection unit is connected to only one domain controller rather than establishing redundant lines with all controllers, the overall wiring harness cost can be reduced.

## Description

### CROSS-REFERENCE TO RELATED APPLICATIONS

This application is an international patent application of Chinese Patent Application No. 202410763115.X filed on June 13, 2024, the disclosure of which is hereby incorporated by reference in its entirety.

### TECHNICAL FIELD

The present invention relates to the technical field of vehicle safety, and in particular to a vehicle collision unlocking system, a method, and a vehicle.

### BACKGROUND

A vehicle is usually in a locked state during driving. When a collision occurs during the driving, the vehicle doors need to be unlocked immediately to facilitate the escape of occupants inside the vehicle and the rescue of rescuers outside the vehicle. Due to the collision, the entire vehicle wiring harness is likely to be affected, and the communication of vehicle controllers is likely to enter an abnormal state, which may result in the failure of unlocking during the collision and the inability to make an emergency rescue call, thus affecting the escape of the occupants inside the vehicle and the implementation of rescue by external personnel.

In the related art, the unlocking of vehicle doors of a system for unlocking during a vehicle collision is controlled by different controllers, and two sets of redundant lines are provided between a collision detection unit and the controllers to ensure the transmission of collision signals and unlocking. However, integrating the collision detection unit and all controllers into a single line results in high costs of wiring harness, and the cost is even higher when two lines run in parallel. In addition, communication for the entire line may be disconnected in a case where a collision affects a certain node or a section of the wiring harness, which poses a great potential safety hazard and makes it difficult to ensure the safety of the vehicle.

### SUMMARY

The present invention provides a vehicle collision unlocking system, which can increase the possibility of successfully unlocking a vehicle door in the event of a collision occurring in a vehicle, thus improving vehicle safety and reducing wiring harness costs.

The technical solution of the present invention is implemented as follows:

Embodiments of the present invention provide a vehicle collision unlocking system, including: a collision detection unit, a plurality of domain controllers, and a plurality of door lock mechanisms.

The collision detection unit is connected to any one of the plurality of domain controllers via at least two lines, the collision detection unit is configured to obtain a collision signal and send the collision signal to the domain controller connected thereto via each of the at least two lines, and each of the at least two lines corresponds to a different communication mode.

Any one of the plurality of domain controllers is connected to at least one door lock mechanism, and is configured to drive the door lock mechanism connected thereto to perform door unlocking based on the received collision signal.

According to the above technical means, since the collision detection unit is connected to any one of the plurality of domain controllers via at least two lines, the collision detection unit can send the collision signal to the domain controller connected to the collision detection unit via at least two lines with different communication modes after obtaining the collision signal, which realizes redundant transmission of the collision signal, increases the possibility that the domain controller receives the collision signal, and drives the door lock mechanism to perform the door unlocking, thus ensuring the safety of the vehicle. In addition, since the collision detection unit is simply connected to any one of the plurality of domain controllers instead of establishing redundant lines with each controller, the wiring harness cost can be reduced.

Further, each of the plurality of domain controllers includes a respective collision unlocking module, and the domain controller is configured to, after receiving the collision signal, drive the corresponding at least one door lock mechanism to perform the door unlocking via the collision unlocking module of the domain controller.

According to the above technical means, each controller may drive the door lock mechanism connected to the domain controller to realize the door unlocking based on the collision unlocking module of the controller after receiving the collision signal.

Further, the plurality of domain controllers include a first domain controller. The first domain controller is connected to the collision detection unit via at least two first lines. The collision detection unit is configured to send the collision signal to the first domain controller via each of the first lines. Each of the first lines corresponds to a different communication mode.

According to the above technical means, the collision detection unit may send the collision signal to the first domain controller via the first lines with different communication modes, which realizes the redundant transmission of the collision signal, increases the possibility that the first domain controller receives the collision signal, thus improving the possibility of successfully unlocking the vehicle door by the door lock mechanism connected to the first domain controller.

Further, the plurality of domain controllers further include a second domain controller. The first domain controller is connected to the second domain controller via at least two second lines. The first domain controller is configured to send the received collision signal to the second domain controller via each of the second lines, and/or the first domain controller is configured to send a collision unlocking instruction to the second domain controller via each of the second lines. The collision unlocking instruction is generated by the first domain controller based on the collision signal. The collision signal and the collision unlocking instruction can be sent via different second lines, and each of the second lines corresponds to a different communication mode.

According to the above technical means, the first domain controller may send the collision signal (and/or the collision unlocking instruction) to the second domain controller via the second lines with different communication modes, which realizes the redundant transmission of the collision signal (and/or the collision unlocking instruction), increases the possibility that the second domain controller receives the collision signal (and/or the collision unlocking instruction), thus improving the possibility of successfully unlocking the vehicle door by the door lock mechanism connected to the second domain controller.

Further, the first domain controller includes a collision unlocking logic module, and the second domain controller includes a first door lock calling module and a first collision unlocking module. The collision unlocking logic module is configured to generate the collision unlocking instruction according to the received collision signal, and send the collision unlocking instruction to the first door lock calling module via the second lines. The first door lock calling module is configured to call the first collision unlocking module based on the received collision unlocking instruction to drive the door lock mechanism connected to the second domain controller to perform the door unlocking.

According to the above technical means, the collision unlocking logic module is configured to generate the collision unlocking instruction according to the received collision signal and send the collision unlocking instruction to the first door lock calling module via the second lines, which enables the first door lock calling module of the second domain controller to call the first collision unlocking module according to the collision unlocking instruction, thereby realizing the unlocking of the vehicle door by the door lock mechanism connected to the second domain controller.

Further, the second domain controller includes a first collision unlocking module. After receiving the collision signal, the second domain controller is configured to drive the door lock mechanism connected to the second domain controller to perform the door unlocking via the first collision unlocking module.

According to the above technical means, the first collision unlocking module of the second domain controller may directly drive, according to the obtained collision signal, the door lock mechanism connected to the second domain controller to perform the door unlocking.

Further, the first domain controller is connected to at least one door lock mechanism, and is configured to drive the at least one door lock mechanism to perform the door unlocking based on the received collision signal. The second domain controller is connected to door lock mechanisms other than the at least one door lock mechanism connected to the first domain controller, and is configured to drive the door lock mechanisms other than the at least one door lock mechanism connected to the first domain controller to perform the door unlocking based on the received collision signal. In some embodiments, the second domain controller is connected to each of the door lock mechanisms, and is configured to drive each of the door lock mechanisms to perform the door unlocking based on the received collision signal.

According to the above technical means, after receiving the collision signal, the first domain controller may drive the door lock mechanism connected to the first domain controller to perform the door unlocking. After receiving the collision signal, the second domain controller may drive the door lock mechanism connected to the second domain controller to perform the door unlocking, thus realizing the safe escape of occupants inside the vehicle.

Further, the plurality of domain controllers further include a third domain controller. The third domain controller is connected to the first domain controller via at least two third lines. The first domain controller is configured to send the received collision signal to the third domain controller via each of the third lines, and/or the first domain controller is configured to send the collision unlocking instruction to the third domain controller via each of the third lines. The collision signal and the collision unlocking instruction may be sent via different third lines, and each of the third lines corresponds to a different communication mode.

According to the above technical means, the first domain controller may send the collision signal (and/or the collision unlocking instruction) to the third domain controller via the third lines with different communication modes, which realizes redundant transmission of the collision signal (and/or the collision unlocking instruction), increases the possibility that the third domain controller receives the collision signal (and/or the collision unlocking instruction), thus improving the possibility of successfully unlocking the vehicle door by the door lock mechanism connected to the third domain controller.

Further, the first domain controller includes a collision unlocking logic module, and the third domain controller includes a second door lock calling module and a second collision unlocking module. The collision unlocking logic module is configured to generate the collision unlocking instruction according to the received collision signal, and send the collision unlocking instruction to the second door lock calling module via the third lines. The second door lock calling module is configured to call the second collision unlocking module based on the received collision unlocking instruction to drive the door lock mechanism connected to the third domain controller to perform the door unlocking.

According to the above technical means, the collision unlocking logic module is configured to generate the collision unlocking instruction according to the received collision signal and send the collision unlocking instruction to the second door lock calling module via the third lines, which enables the second door lock calling module of the third domain controller to call the second collision unlocking module according to the collision unlocking instruction, thus realizing the unlocking of the vehicle door by the door lock mechanism connected to the third domain controller.

Further, the third domain controller includes a second collision unlocking module. After receiving the collision signal, the third domain controller is configured to drive, via the second collision unlocking module, the door lock mechanism connected to the third domain controller to perform the door unlocking.

According to the above technical means, the second collision unlocking module of the third domain controller may directly drive the door lock mechanism connected to the third domain controller to perform the door unlocking according to the obtained collision signal.

Further, the third domain controller is connected to the second domain controller via a fourth line, and the second domain controller and the third domain controller are configured to transmit the collision signal via the fourth line.

According to the above technical means, in a case where the second domain controller receives the collision signal, the second domain controller may send the collision signal to the third domain controller via the fourth line. In some embodiments, in a case where the third domain controller receives the collision signal, the third domain controller may send the collision signal to the second domain controller via the fourth line. Thus, it can be ensured that the second domain controller and the third domain controller can successfully drive the corresponding door lock mechanisms to perform the door unlocking.

Further, the first domain controller is connected to at least two of the plurality of door lock mechanisms respectively, or the second domain controller is connected to at least two of the plurality of door lock mechanisms respectively, or the third domain controller is connected to at least two of the plurality of door lock mechanisms respectively.

According to the above technical means, the first domain controller, the second domain controller, or the third domain controller may determine, according to the received collision signal, at least two door lock mechanisms connected thereto to perform the door unlocking.

Further, the vehicle collision unlocking system further includes an emergency call controller. The emergency call controller is connected to the collision detection unit, and the emergency call controller is configured to output emergency rescue information based on the collision signal after receiving the collision signal sent by the collision detection unit.

According to the above technical means, the emergency call controller may output the emergency rescue information after receiving the collision signal sent by the collision detection unit, which realizes timely seeking of off-vehicle rescue and improves the safety of the vehicle .

Further, the first domain controller is connected to the emergency call controller via at least two fifth lines. The first domain controller is configured to send the received collision signal to the emergency call controller via each of the fifth lines, and each of the fifth lines corresponds to a different communication mode.

According to the above technical means, the first domain controller may send the collision signal to the emergency call controller via each of the fifth lines respectively, which enables the emergency call controller to output the emergency rescue information based on the collision signal and realizes the timely off-vehicle rescue .

Further, any one of the plurality of domain controllers includes an emergency call unit. The emergency call unit is configured to output the emergency rescue information based on the collision signal after any one of the plurality of domain controllers receives the collision signal.

According to the above technical means, by integrating the emergency call unit in any one of the plurality of domain controllers, the controller may output emergency rescue information based on the emergency call unit after receiving the collision signal, thus realizing the off-vehicle rescue.

Embodiments of the present invention provide a vehicle collision unlocking method, which is applied to the vehicle collision unlocking system provided in the embodiments of the present invention. The method includes: after receiving the collision signal, sending, by the collision detection unit, the collision signal to the domain controller connected to the collision detection unit via each of the at least two lines, where each of the at least two lines corresponds to a different communication mode, and the domain controller is any one of the plurality of domain controllers; and driving, by the domain controller based on the received collision signal, the door lock mechanism connected to the domain controller to perform the door unlocking.

According to the above technical means, the collision detection unit may send the collision signal to the domain controller connected to the collision detection unit via at least two lines with different communication modes, which realizes the redundant transmission of the collision signal, increases the possibility that the domain controller receives the collision signal, thus driving the corresponding door lock mechanism to perform the door unlocking and ensuring the safety of the vehicle.

Embodiments of the present invention provide a vehicle. The vehicle includes the vehicle collision unlocking system according to the embodiments of the present invention.

On the one hand, in the vehicle collision unlocking system provided by the embodiments of the present invention, since the collision detection unit is connected to any one of the plurality of domain controllers via at least two lines, the collision detection unit may send the collision signal to the connected domain controller via at least two lines with different communication modes after obtaining the collision signal, which realizes the redundant transmission of the collision signal, increases the possibility that the domain controller receives the collision signal, and drives the door lock mechanism to perform the door unlocking, thus ensuring the safety of the vehicle. On the other hand, since the collision detection unit is simply connected to any one of the plurality of domain controllers instead of establishing redundant lines with each controller, the wiring harness cost can be reduced.

### BRIEF DESCRIPTION OF DRAWINGS

FIG. 1 is a first schematic structural diagram of a vehicle collision unlocking system according to an embodiment of the present invention.
FIG. 2 is a schematic diagram of signal transmission between domain controllers according to an embodiment of the present invention.
FIG. 3 is a second schematic structural diagram of a vehicle collision unlocking system according to an embodiment of the present invention.
FIG. 4 is a third schematic structural diagram of a vehicle collision unlocking system according to an embodiment of the present invention.
FIG. 5 is a first schematic structural diagram of a collision unlocking and emergency rescue call redundancy system according to an embodiment of the present invention.
FIG. 6 is a second schematic structural diagram of a collision unlocking and emergency rescue call redundancy system according to an embodiment of the present invention.
FIG. 7 is a third schematic structural diagram of a collision unlocking and emergency rescue call redundancy system according to an embodiment of the present invention.
FIG. 8 is a fourth schematic structural diagram of a collision unlocking and emergency rescue call redundancy system according to an embodiment of the present invention.
FIG. 9 is a schematic diagram of collision signal transmission and calling between domain controllers according to an embodiment of the present invention.
FIG. 10 is a schematic flowchart of a vehicle collision unlocking method according to an embodiment of the present invention.
FIG. 11 is a schematic structural diagram of a composition of a vehicle according to an embodiment of the present invention.

### DETAILED DESCRIPTION

In order to make the objectives, technical solutions and advantages of the present invention clearer, the present invention will be further described below with reference to the accompanying drawings. The described embodiments should not be considered as limiting the present invention, and all other embodiments obtained by those of ordinary skill in the art without creative efforts shall fall within the protection scope of the present invention.

In the following description, references to "some embodiments\other embodiments" describe subsets of all possible embodiments. It should be understood that "some embodiments\other embodiments" may be the same subset or different subsets of all possible embodiments, and may be combined with each other without conflicts.

In the following description, the terms "first\second\third\fourth\fifth" are merely used to distinguish similar objects and do not represent a specific order of the objects. It should be understood that "first\second\third\fourth\fifth" may be interchanged in specific order or sequence where permitted, so that the embodiments of the present invention described herein can be implemented in an order other than that illustrated or described herein.

Unless otherwise specified, all technical and scientific terms used herein have the same meaning as commonly understood by those of ordinary skill in the art to which the present invention belongs. The terms used herein are merely for the purpose of describing the embodiments of the present invention and are not intended to limit the present invention.

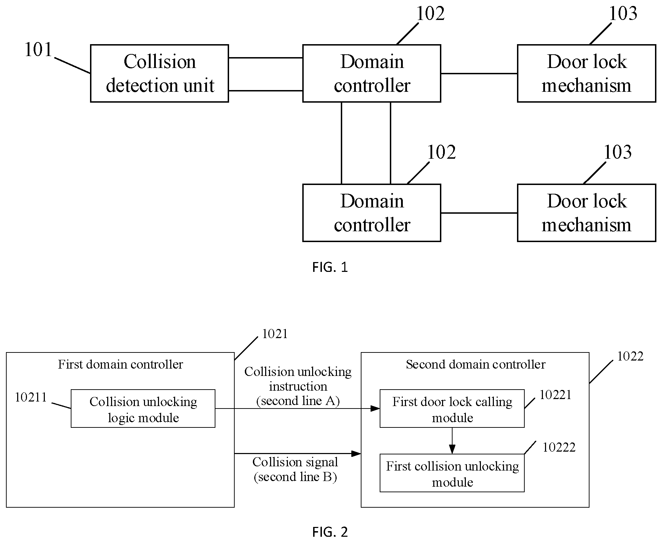

Based on the problems existing in the related art, the present invention proposes a vehicle collision unlocking system, which can improve the possibility of successfully unlocking the vehicle door when a vehicle collision occurs, enhance the vehicle safety, and reduce the wiring harness costs. FIG. 1 is a first schematic structural diagram of a vehicle collision unlocking system according to an embodiment of the present invention. The vehicle collision unlocking system 100 includes a collision detection unit 101, a plurality of domain controllers 102, and a plurality of door lock mechanisms 103.

In some embodiments, the collision detection unit 101 is connected to any one of the plurality of domain controllers 102 via at least two lines. The collision detection unit 101 is configured to obtain a collision signal and send the collision signal to the domain controller 102 connected to the collision detection unit 101 via at least two lines, respectively. Each of the at least two lines corresponds to a different communication mode.

It should be noted that each of the at least two lines corresponding to a different communication mode may mean that the communication protocols of the lines are different, the types of the lines are different, or the signal transmission modes of the lines are different. The lines may be hardwires, Controller Area Network (CAN) buses, Ethernet, or the like. The number of the domain controllers 102 may be two or more. The domain controllers 102 may be body domain controllers, cockpit domain controllers, chassis domain controllers, powertrain domain controllers, or the like.

In some embodiments, in a case where the number of the plurality of domain controllers 102 is two, the collision detection unit 101 may be connected to any one of the two domain controllers 102 via at least two lines, and send the obtained collision signal to the domain controller 102 connected to the collision detection unit 101 via each of the lines.

In some embodiments, in a case where the number of the plurality of domain controllers 102 is three, the collision detection unit 101 may be connected to any one of the three domain controllers 102 via at least two lines, and send the obtained collision signal to the domain controller 102 connected to the collision detection unit 101 via each of the lines.

It should be noted that the above description of the number of the domain controllers 102 is merely exemplary, and the present invention is not limited in this regard.

In some embodiments, any one of the plurality of domain controllers 102 is connected to at least one door lock mechanism 103, and is configured to drive the door lock mechanism 103 connected to the domain controller to perform the door unlocking based on the received collision signal.

It should be noted that the domain controller 102 and the door lock mechanism 103 may be connected via a hard wire, an Ethernet, a CAN bus, or the like, and the number of the door lock mechanisms 103 may be four, six, or the like.

In some embodiments, in a case where the number of the domain controllers 102 is two and the number of the door lock mechanisms 103 is four, one of the two domain controllers 102 may be connected to two door lock mechanisms 103, and the other one of the two domain controller may be connected to the other two door lock mechanisms 103. In a case where the number of the domain controllers 102 is three and the number of the door lock mechanisms 103 is four, one of the three domain controllers 102 may be connected to two door lock mechanisms, and the other two of the three domain controllers 102 may each be connected to one door lock mechanism 103. In a case where the number of the domain controllers 102 is four and the number of the door lock mechanisms 103 is six, two of the four domain controllers 102 may each be connected to two door lock mechanisms 103, and the other two of the four domain controllers 102 may each be connected to one door lock mechanism 103. The above description of the number of the domain controllers 102, the number of the door lock mechanisms 103, and the connection modes between the domain controllers 102 and the door lock mechanisms 103 is merely exemplary, and the present invention is not limited in this regard.

In some embodiments, after receiving the collision signal, the domain controller 102 may drive one or more door lock mechanisms 103 connected to the domain controller 102 to perform the door unlocking according to the built-in collision unlocking software, thus enabling the vehicle occupants to escape.

It can be understood that, in the embodiments of the present invention, since the collision detection unit 101 is connected to any one of the plurality of domain controllers 102 via at least two lines, the collision detection unit 101 may send the collision signal to the domain controller 102 connected to the collision detection unit 101 via the at least two lines with different communication modes after obtaining the collision signal, which realizes redundant transmission of the collision signal, increases the possibility that the domain controller receives the collision signal, and drives the door lock mechanism to perform the door unlocking, thus ensuring the safety of the vehicle. In addition, since the collision detection unit is simply connected to any one of the plurality of domain controllers instead of establishing redundant lines with each controller, the wiring harness cost can be reduced.

In some embodiments of the present invention, each of the plurality of domain controllers 102 includes a respective collision unlocking module. After receiving the collision signal, the domain controller 102 is configured to drive the corresponding door lock mechanism to perform the door unlocking via the collision unlocking module of the domain controller 102.

In some embodiments, each domain controller 102 may include a respective collision unlocking module, which may be a basic software module of the domain controller 102. The collision unlocking module may include a collision unlocking logic module and a door lock driving module. The collision unlocking logic module may parse the received collision signal, generate a corresponding door lock driving instruction, and transmit the door lock driving instruction to the door lock driving module, so that the door lock driving module may directly drive the door lock mechanism connected to the domain controller to perform the door unlocking.

According to the above technical means, after receiving the collision signal, each domain controller 102 may drive, based on the collision unlocking module of the domain controller 102, the door lock mechanism connected to the domain controller 102 to realize the door unlocking.

In some embodiments, the domain controller 102 connected to the collision detection unit 101 includes a collision unlocking logic module, and other domain controllers 102 not connected to the collision detection unit include a door lock calling module. The collision unlocking logic module may generate a collision unlocking instruction based on the received collision signal, and send the collision unlocking instruction to the door lock calling module of other domain controllers that establish a communication connection with the domain controller where the collision unlocking logic module is located, so as to realize the calling of the door lock calling module. The door lock calling module may transmit the called information to the collision unlocking module of the domain controller where the door lock calling module is located, thus driving, via the collision unlocking module, the door lock mechanism connected to the domain controller where the door lock calling module is located to realize the door unlocking.

In some embodiments of the present invention, the plurality of domain controllers 102 include a first domain controller 1021. The first domain controller 1021 is connected to the collision detection unit 101 via at least two first lines. The collision detection unit 101 sends the collision signal to the first domain controller 1021 via each of the first lines, and each of the first lines corresponds to a different communication mode.

In some embodiments, each of the first lines between the first domain controller 1021 and the collision detection unit 101 is independent of each other, that is, the transmission of the collision signal between the collision detection unit 101 and the first domain controller 1021 via each first line does not affect each other. Each first line has a different line type, and the first line may be a hard wire, a CAN bus, an Ethernet, or the like. The first domain controller 1021 may be any one of a body domain controller, a cockpit domain controller, a chassis domain controller, a powertrain domain controller, and the like.

For example, in a case where there are two first lines between the collision detection unit 101 and the first domain controller 1021, one first line may be a hard wire, and the other first line may be a CAN bus or an Ethernet. In a case where there are three first lines between the collision detection unit 101 and the first domain controller 1021 (for example, the three first lines are line A, line B and line C, respectively), line A may be a hard wire, line B may be a CAN bus, and line C may be an Ethernet; or line A may be a hard wire, line B may be an Ethernet, and line C may be a CAN bus; or line A may be a CAN bus, line B may be a hard wire, and line C may be an Ethernet; or line A may be an Ethernet, line B may be a hard wire, and line C may be a CAN bus; or line A may be an Ethernet, line B may be a CAN bus, and line C may be a hard wire; or line A may be a CAN bus, line B may be an Ethernet, and line C may be a hard wire. The above description of the number and types of the first lines is merely exemplary, and the present invention is not limited in this regard.

According to the above technical means, the collision detection unit 101 may transmit the collision signal to the first domain controller 1021 via the first line with different communication modes, which realizes the redundant transmission of the collision signal, and improves the possibility that the first domain controller 1021 receives the collision signal, thus increasing the possibility that the door lock mechanism connected to the first domain controller 1021 successfully unlocks the vehicle door.

In some embodiments of the present invention, the plurality of domain controllers 102 further include a second domain controller 1022. The first domain controller 1021 is connected to the second domain controller 1022 via at least two second lines. The first domain controller 1021 is configured to send the received collision signal to the second domain controller 1022 via each of the second lines; or the first domain controller 1021 sends the collision unlocking instruction to the second domain controller 1022 via each of the second lines; or the first domain controller 1021 sends both the collision signal and the collision unlocking instruction to the second domain controller 1022 via each of the second lines. The collision signal and the collision unlocking instruction may be sent via different second lines, and each of the second lines corresponds to a different communication mode.

It should be noted that each of the second lines between the first domain controller 1021 and the second domain controller 1021 is independent of each other, and the collision signal or the collision unlocking instruction may be transmitted independently in each second line. The transmission speed of the collision signal is related to the communication mode of the second line. Each second line has a different type and a different communication protocol. The second line may be a hard wire, a CAN bus, an Ethernet, or the like. The types of the second line and the first line may be the same or different.

In some embodiments, in a case where the collision signal and the collision unlocking instruction are transmitted simultaneously via the second lines, some of the plurality of second lines may be used to transmit the collision signal, and other parts of the plurality of second lines may be used to transmit the collision unlocking instruction. In some embodiments, in a case where there are three second lines (e.g., line A, line B and line C), the collision signal may be transmitted via line A and line B, and the collision unlocking instruction may be transmitted via line C. In addition, line A, line B and line C have different communication modes or communication protocols. The communication protocol of line A may be the CAN protocol, the communication protocol of line B may be the first Ethernet protocol, and the communication protocol of line C may be the second Ethernet protocol. The above description of the number of second lines, the data type (collision signal or collision unlocking instruction) transmitted by each second line, and the communication protocol of each second line is merely exemplary, and the present invention is not limited in this regard.

In some embodiments, the second domain controller 1022 may be any one of a body domain controller, a cockpit domain controller, a chassis domain controller, a powertrain domain controller, and the like. The types of the second domain controller 1022 and the first domain controller 1021 may be the same or different. For example, both the first domain controller 1021 and the second domain controller 1022 may be body domain controllers; or the first domain controller 1021 is a body domain controller, and the second domain controller 1022 is a cockpit domain controller; or the first domain controller 1021 is a body domain controller, and the second domain controller 1022 is a chassis domain controller, etc. The above description of the types of the first domain controller 1021 and the second domain controller 1022 is merely exemplary, and the present invention is not limited in this regard.

In some embodiments, the first domain controller 1021 is connected to the collision detection unit 101. The second domain controller 1022 is not connected to the collision detection unit 101, but is only connected to the first domain controller 1021. Via the second line between the first domain controller 1021 and the second domain controller 1022, the second domain controller 1022 may receive the collision signal or the collision unlocking instruction sent by the first domain controller 1021.

According to the above technical means, the first domain controller 1021 may transmit the collision signal (or the collision unlocking instruction) to the second domain controller 1022 via a plurality of second lines with different communication modes, which realizes the redundant transmission of the collision signal (or the collision unlocking instruction) and improves the possibility that the second domain controller 1022 receives the collision signal (or the collision unlocking instruction), thus increasing the possibility that the door lock mechanism connected to the second domain controller 1022 successfully unlocks the vehicle door.

In some embodiments of the present invention, as shown in FIG. 2, the first domain controller 1021 includes a collision unlocking logic module 10211, and the second domain controller 1022 includes a first door lock calling module 10221 and a first collision unlocking module 10222. The collision unlocking logic module 10211 is configured to generate a collision unlocking instruction according to the received collision signal, and send the collision unlocking instruction to the first door lock calling module 10221 via the second lines. The first door lock calling module 10221 is configured to call the first collision unlocking module 10222 based on the received collision unlocking instruction to drive the door lock mechanism connected to the second domain controller 1022 to perform the door unlocking.

In some embodiments, the collision unlocking logic module 10211 may be an application software module integrated in the first domain controller 1021. The first door lock calling module 10221 may be an application software module integrated in the second domain controller 1022. The first collision unlocking module 10222 may be a basic software module integrated in the second domain controller 1022. After receiving the collision signal sent by the collision detection unit, the second domain controller 1022 may generate a collision unlocking instruction, call the first door lock calling module 10221 in the second domain controller 1022 via the collision unlocking instruction, and transmit the calling information to the first collision unlocking module 10222, thus realizing the door unlocking.

According to the above technical means, the collision unlocking logic module is configured to generate a collision unlocking instruction according to the received collision signal, and send the collision unlocking instruction to the first door lock calling module via the second lines, so that the first door lock calling module of the second domain controller may call the first collision unlocking module according to the collision unlocking instruction, thus realizing that the door lock mechanism connected to the second domain controller performs the door unlocking.

In some embodiments of the present invention, as shown in FIG. 2, after receiving the collision signal, the second domain controller 1022 is configured to drive, via the first collision unlocking module 10222, the door lock mechanism connected to the second domain controller 1022 to perform the door unlocking.

In some embodiments, the second domain controller 1022 may receive the collision signal sent by the first domain controller 1021, and through the built-in software module of the second domain controller 1022 (i.e., the first collision unlocking module 10222), directly drive, according to the collision signal, the door lock mechanism connected to the second domain controller 1022 to perform the door unlocking.

According to the above technical means, the first collision unlocking module of the second domain controller may directly drive, according to the obtained collision signal, the door lock mechanism connected to the second domain controller to perform the door unlocking.

In some embodiments of the present invention, the first domain controller 1021 is connected to at least one door lock mechanism, and is configured to drive, based on the received collision signal, the at least one door lock mechanism to perform the door unlocking. The second domain controller 1022 is connected to door lock mechanisms other than the door lock mechanism connected to the first domain controller 1021, and is configured to drive, based on the received collision signal, the door lock mechanisms other than the door lock mechanism connected to the first domain controller 1021 to perform door unlocking.

In some embodiments, the first domain controller 1021 may be connected to one or more door lock mechanisms. After receiving the collision signal sent by the collision detection unit 101, the first domain controller 1021 may directly drive the one or more door lock mechanisms connected to the first domain controller 1021 to perform the door unlocking. The second domain controller 1022 may establish a connection with other door lock mechanisms different from those connected to the first domain controller 1021. For example, in a case where there are four door lock mechanisms, the first domain controller 1021 may be connected to two of the four door lock mechanisms, and the second domain controller 1022 may be connected to the other two door lock mechanisms; or the first domain controller 1021 is connected to one of the four door lock mechanisms, and the second domain controller 1022 is connected to the other three door lock mechanisms; or the first domain controller 1021 is connected to three of the four door lock mechanisms, and the second domain controller 1022 is connected to the remaining one door lock mechanism.

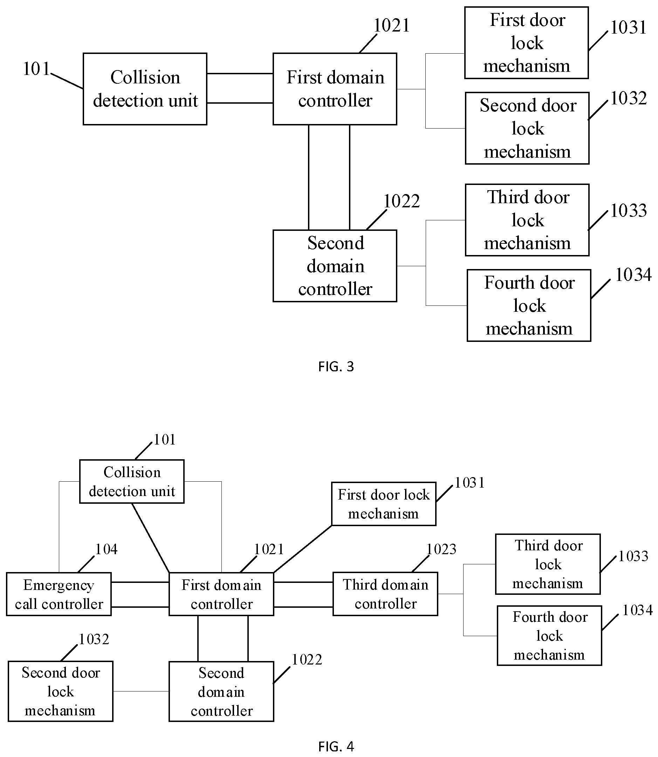

In some embodiments, FIG. 3 is a second schematic structural diagram of a vehicle collision unlocking system according to an embodiment of the present invention. In the vehicle collision unlocking system 100, the plurality of door lock mechanisms 103 include a first door lock mechanism 1031, a second door lock mechanism 1032, a third door lock mechanism 1033, and a fourth door lock mechanism 1034. The first domain controller 1021 is connected to the first door lock mechanism 1031 and the second door lock mechanism 1032, respectively. The second domain controller 1022 is connected to the third door lock mechanism 1033 and the fourth door lock mechanism 1034, respectively.

In some embodiments, the line type of the connection line between the first domain controller 1021 and the first door lock mechanism 1031 may be the same as or different from that of the connection line between the first domain controller 1021 and the second door lock mechanism 1032. The line type of the connection line between the second domain controller 1022 and the third door lock mechanism 1033 may be the same as or different from that of the connection line between the second domain controller 1022 and the fourth door lock mechanism.

In some embodiments, the first domain controller 1021 may drive, based on the received collision signal, the first door lock mechanism 1031 and the second door lock mechanism 1032 to perform the door unlocking. The second domain controller 1022 may drive, based on the received collision signal, the third door lock mechanism 1033 and the fourth door lock mechanism 1034 to perform the door unlocking.

In some embodiments, the first door lock mechanism 1031, the second door lock mechanism 1032, the third door lock mechanism 1033 and the fourth door lock mechanism 1034 may respectively correspond to the left front door (driver's side), left rear door, right front door (front passenger's side) and right rear door of the vehicle, or respectively correspond to the left front door (driver's side), right front door (front passenger's side), left rear door and right rear door of the vehicle. After the first domain controller 1021 drives the first door lock mechanism 1031 and the second door lock mechanism 1032 connected thereto for unlocking, the doors corresponding to the first door lock mechanism 1031 and the second door lock mechanism 1032 will be opened. After the second domain controller 1022 drives the third door lock mechanism 1033 and the fourth door lock mechanism 1034 connected thereto for unlocking, the doors corresponding to the third door lock mechanism 1033 and the fourth door lock mechanism 1034 will be opened. Thus, the safe escape of vehicle occupants can be realized.

In some embodiments, the second domain controller 1022 may be respectively connected to the door lock mechanisms, and is configured to drive the door lock mechanisms to perform the door unlocking based on the received collision signal. In this case, the first domain controller 1021 is not connected to any door lock mechanism, but only transmits the received collision signal to the second domain controller 1022.

In some embodiments, in a case where there are four door lock mechanisms, the second domain controller 1022 may be connected to all four door lock mechanisms. After receiving the collision signal sent by the collision detection unit 101, the first domain controller 1021 may send the collision signal to the second domain controller 1022. After receiving the collision signal, the second domain controller 1022 may directly drive the four door lock mechanisms connected thereto to perform the door unlocking.

According to the above technical means, after receiving the collision signal, the first domain controller may drive the door lock mechanism connected to the first domain controller to perform the door unlocking, and after receiving the collision signal, the second domain controller may drive the door lock mechanism connected to the second domain controller to perform the door unlocking, thus realizing the safe escape of vehicle occupants.

In some embodiments of the present invention, the plurality of domain controllers 102 further include a third domain controller 1023. The third domain controller 1023 is connected to the first domain controller 1021 via at least two third lines. The first domain controller 1021 is configured to send the received collision signal to the third domain controller 1023 via each of the third lines; or the first domain controller 1021 is configured to send the collision unlocking instruction to the third domain controller 1023 via each of the third lines; or the first domain controller 1021 is configured to send both the collision signal and the collision unlocking instruction to the third domain controller 1023 via each of the third lines. The collision signal and the collision unlocking instruction may be sent via different third lines, and each of the third lines corresponds to a different communication mode.

It should be noted that the types of the third domain controller 1023 and the first domain controller 1021 may be the same or different, and the types of the third domain controller 1023 and the second domain controller 1022 may be the same or different. The third line may be a hard wire, a CAN bus, an Ethernet, or the like, and each third line has a different type. The third lines between the second domain controller 1022 and the third domain controller 1023 may be mutually independent, and the collision signal or the collision unlocking instruction may be transmitted independently in each third line. The line types of the third line, the first line and the second line may be the same or different. In some embodiments, the number of third lines between the first domain controller 1021 and the third domain controller 1023 may be two, three, or the like. In a case where there are two third lines, one of the two third lines may be a hard wire, and the other one of the two third lines may be an Ethernet or a CAN bus. In a case where there are three third lines, one of the three third lines is a hard wire, one is a CAN bus, and one is an Ethernet. The above description of the number and types of the third lines is merely exemplary, and the present application is not limited in this regard.

In some embodiments, in a case where the collision signal and the collision unlocking instruction are transmitted simultaneously via the third lines, some of the plurality of third lines may be used to transmit the collision signal, and other parts of the plurality of third lines may be used to transmit the collision unlocking instruction. In some embodiments, in a case where there are two third lines (e.g., line D and line E), the collision unlocking instruction may be transmitted via line D, and the collision signal may be transmitted via line E. The communication protocols of line D and line E are different. The communication protocol of line E may be the CAN protocol, and the communication protocol of line E may be the Ethernet protocol. The above description of the number of third lines, the data type (collision signal or collision unlocking instruction) transmitted by each third line, and the communication protocol of each third line is merely exemplary, and the present application is not limited in this regard.

According to the above technical means, the first domain controller 1021 may send a collision signal (or a collision unlocking instruction) to the third domain controller 1023 via the third lines with different communication modes, which realizes the redundant transmission of the collision signal (or the collision unlocking instruction) and improves the possibility that the third domain controller 1023 receives the collision signal (or the collision unlocking instruction), thus increasing the probability that the door lock mechanism connected to the third domain controller 1023 successfully unlocks the vehicle door.

In some embodiments of the present invention, the first domain controller 1022 includes a collision unlocking logic module 10221, and the third domain controller 1023 includes a second door lock calling module 10231 and a second collision unlocking module 10232. The collision unlocking logic module 10221 is configured to generate the collision unlocking instruction according to the received collision signal, and send the collision unlocking instruction to the second door lock calling module 10231 via the third line. The second door lock calling module 10231 is configured to call the second collision unlocking module 10232 based on the received collision unlocking instruction to drive the door lock mechanism connected to the third domain controller 1023 to perform the door unlocking.

In some embodiments, the second door lock calling module 10231 may be an application software module integrated in the third domain controller 1023, and the second collision unlocking module 10232 may be a basic software module integrated in the third domain controller 1023. After receiving the collision signal sent by the collision detection unit, the third domain controller 1023 may generate a collision unlocking instruction, call the second door lock calling module 10231 in the third domain controller 1023 through the collision unlocking instruction, and transmit the calling information to the second collision unlocking module 10232, thus realizing the door unlocking.

According to the above technical means, the collision unlocking logic module is configured to generate the collision unlocking instruction according to the received collision signal, and send the collision unlocking instruction to the second door lock calling module via the third lines, which enables the second door lock calling module of the third domain controller to call the second collision unlocking module according to the collision unlocking instruction, thus realizing that the door lock mechanism connected to the third domain controller performs the door unlocking.

In some embodiments of the present invention, after receiving the collision signal, the third domain controller 1023 may drive, via the second collision unlocking module 10232, the door lock mechanism connected to the third domain controller 1023 to perform the door unlocking.

In some embodiments, the third domain controller 1023 may receive the collision signal sent by the first domain controller 1021, and through the built-in software module of the third domain controller 1023 (i.e., the second collision unlocking module 10232), directly drive, according to the collision signal, the door lock mechanism connected to the third domain controller 1023 to perform the door unlocking.

According to the above technical means, the second collision unlocking module of the third domain controller may directly drive, according to the obtained collision signal, the door lock mechanism connected to the third domain controller to perform the door unlocking.

In some embodiments of the present invention, the third domain controller 1023 is connected to the second domain controller 1022 via a fourth line, and the second domain controller 1022 and the third domain controller 1023 may transmit the collision signal via the fourth line.

In some embodiments, the fourth line may be the same as or different from the first line, the second line, and the third line. The fourth line may be a hard wire, an Ethernet, a CAN bus, or other types of lines.

In some embodiments, in a case where all the third lines between the first domain controller 1021 and the third domain controller 1023 fail, the second domain controller 1022 may send the collision signal to the third domain controller via the fourth line after receiving the collision signal sent by the first domain controller 1021, and in a case where all the second lines between the first domain controller 1021 and the second domain controller 1022 fail, the third domain controller 1023 may send the collision signal to the second domain controller via the fourth line after receiving the collision signal sent by the first domain controller 1021, thus realizing the mutual transmission of the collision signal between the second domain controller 1022 and the third domain controller 1023.

According to the above technical means, in a case where the second domain controller 1022 receives the collision signal, the second domain controller 1022 may send the collision signal to the third domain controller 1023 via the fourth line; or when the third domain controller 1023 receives the collision signal, the third domain controller 1023 may send the collision signal to the second domain controller 1022 via the fourth line, thus ensuring that the second domain controller 1022 and the third domain controller 1023 can successfully drive the corresponding door lock mechanisms to realize the door unlocking.

In some embodiments of the present invention, the first domain controller 1021 is connected to at least two door lock mechanisms of the plurality of door lock mechanisms 103, or the second domain controller 1022 is connected to at least two door lock mechanisms of the plurality of door lock mechanisms 103, or the third domain controller 1023 is connected to at least two door lock mechanisms of the plurality of door lock mechanisms 103.

In some embodiments, there may be four door lock mechanisms 103. The first domain controller 1021 may be connected to two door lock mechanisms 103, and each of the second domain controller 1022 and the third domain controller 1023 may be connected to one door lock mechanism 103; or the second domain controller 1022 may be connected to two door lock mechanisms 103, and each of the first domain controller 1022 and the third domain controller 1023 may be connected to one door lock mechanism 103; or the third domain controller 1023 may be connected to two door lock mechanisms 103, and each of the first domain controller 1021 and the second domain controller 1022 may be connected to one door lock mechanism 103; or the first domain controller 1021 may be connected to two door lock mechanisms 103, the second domain controller 1022 may be connected to the other two door lock mechanisms 103, and the third domain controller 1023 is not connected to any door lock mechanism 103. The number of the door lock mechanisms 103 and the connection modes between the door lock mechanisms 103 and each of the first domain controller 1021, the second domain controller 1022, and the third domain controller 1023 are merely exemplary, and the present invention is not limited in this regard.

According to the above technical means, the first domain controller 1021, the second domain controller 1022 or the third domain controller 1023 may drive at least two door lock mechanisms connected thereto according to the received collision signal, thus realizing the door unlocking.

In some embodiments of the present invention, as shown in FIG. 4, the plurality of door lock mechanisms 103 include a first door lock mechanism 1031, a second door lock mechanism 1032, a third door lock mechanism 1033 and a fourth door lock mechanism 1034. The first domain controller 1021 is connected to the first door lock mechanism 1031 and is configured to drive the first door lock mechanism 1031 to perform the door unlocking based on the received collision signal. The second domain controller 1022 is connected to the second door lock mechanism 1032 and is configured to drive the second door lock mechanism 1032 to perform the door unlocking based on the received collision signal. The third domain controller 1023 is connected to the third door lock mechanism 1033 and the fourth door lock mechanism 1034, and is configured to drive the third door lock mechanism 1033 and the fourth door lock mechanism 1034 to perform the door unlocking based on the received collision signal.

In some embodiments, the first domain controller 1021 may be connected to the first door lock mechanism 1031 and the second door lock mechanism 1032, and may be configured to drive the first door lock mechanism 1031 and the second door lock mechanism 1032 to perform the door unlocking based on the received collision signal. The second domain controller 1022 may be connected to the third door lock mechanism 1033, and may be configured to drive the third door lock mechanism 1033 to perform the door unlocking based on the received collision signal. The third domain controller 1023 may be connected to the fourth door lock mechanism 1034 and configured to drive the fourth door lock mechanism 1034 to perform the door unlocking based on the received collision signal.

In some embodiments, the first domain controller 1021 may be connected to the first door lock mechanism 1031, and may be configured to drive the first door lock mechanism 1031 to perform the door unlocking based on the received collision signal. The second domain controller 1022 may be connected to the second door lock mechanism 1032 and the third door lock mechanism 1033, and may be configured to drive the second door lock mechanism 1032 and the third door lock mechanism 1033 to perform the door unlocking based on the received collision signal. The third domain controller 1023 may be connected to the fourth door lock mechanism 1034, and may be configured to drive the fourth door lock mechanism 1034 to perform the door unlocking based on the received collision signal.

In some embodiments, the first domain controller 1021 may be connected to the first door lock mechanism 1031 and the second door lock mechanism 1032, and may be configured to drive the first door lock mechanism 1031 and the second door lock mechanism 1032 to perform the door unlocking based on the received collision signal. The second domain controller 1022 may be connected to the third door lock mechanism 1033 and the fourth door lock mechanism 1034, and may be configured to drive the third door lock mechanism 1033 and the fourth door lock mechanism 1034 to perform the door unlocking based on the received collision signal.

It can be understood that, according to the above technical means, after receiving the collision signal, the first domain controller 1021 may drive the first door lock mechanism 1031 to perform the door unlocking. After receiving the collision signal, the second domain controller 1022 may drive the second door lock mechanism 1022 to perform the door unlocking. After receiving the collision signal, the third domain controller 1023 may drive the third door lock mechanism 1033 and the fourth door lock mechanism 1034 to perform the door unlocking.

In some embodiments of the present invention, the vehicle collision unlocking system 100 may further include an emergency call controller 104, and the emergency call controller 104 is connected to the collision detection unit 101. The emergency call controller 104 is configured to, after receiving the collision signal sent by the collision detection unit 101, output emergency rescue information based on the collision signal.

In some embodiments, the emergency call controller 104 may be connected to the collision detection unit 101 via a hard wire, an Ethernet, a CAN bus or other modes. The emergency call controller 104 may be an Emergency Call (E-CALL) controller with internet access capability. After receiving the collision signal sent by the collision detection unit 101, the emergency call controller 104 may output the emergency rescue information, which may be making an emergency rescue call or outputting a voice message indicating the need for rescue to seek external assistance.

In some embodiments, the emergency call controller 104 and the domain controller 102 may be connected via at least one line. In a case where there are multiple lines between the emergency call controller 104 and the domain controller 102, each line may have a different communication mode. Through the connection line between the emergency call controller 104 and the domain controller 102, in a case where the connection line between the collision detection unit 101 and the domain controller 102 fails, the collision signal may be sent to the domain controller 102 via the emergency call controller 104, so that the domain controller 102 can still receive the collision signal to drive the corresponding door lock mechanism 103 to realize the door unlocking. Similarly, in a case where the line between the collision detection unit 101 and the emergency call controller fails, the collision signal may also be sent to the emergency call controller 104 via the domain controller 102, which improves the possibility that the emergency call controller 104 receives the collision signal.

According to the above technical means, after receiving the collision signal sent by the collision detection unit 101, the emergency call controller 104 may output the emergency rescue information, which realizes the timely seeking of off-vehicle rescue and improves the safety of the vehicle.

In some embodiments of the present invention, the first domain controller 1021 may be connected to the emergency call controller 104 via at least two fifth lines. The first domain controller 1021 may send the received collision signal to the emergency call controller 1021 via each of the fifth lines, and each of the fifth lines has a different communication mode.

It should be noted that the fifth line may the same as or different from each of the first line, the second line, the third line and the fourth line, and each fifth line may have a different line type. The fifth line may be a hard wire, a CAN bus, an Ethernet, etc. The fifth lines may be mutually independent.

In some embodiments, the first domain controller 1021 may send the collision signal obtained from the collision detection unit 103 to the emergency call controller 1021 via the fifth lines. In some other embodiments, in a case where the first line between the collision detection unit 103 and the first domain controller 1021 fails, the emergency call controller 104 may also send the collision signal to the first domain controller 1021 via the fifth lines after receiving the collision signal sent by the collision detection unit 103, so that the first domain controller 1021 can drive the door lock mechanism connected thereto to perform the door unlocking after receiving the collision signal.

In some embodiments, as shown in FIG. 3, there may be two fifth lines between the first domain controller 1021 and the emergency call controller 104, and the two fifth lines may be used to transmit the collision signal simultaneously without affecting each other.

According to the above technical means, the first domain controller 1021 may send the collision signal to the emergency call controller 104 via each of the fifth lines, so that the emergency call controller 104 outputs the emergency rescue information based on the collision signal, thus realizing the timely off-vehicle rescue.

In some embodiments of the present invention, any one of the plurality of domain controllers 102 may include an emergency call unit. The emergency call unit is configured to output the emergency rescue information based on the collision signal after any one of the plurality of domain controllers 102 receives the collision signal.

In some embodiments, in a case where the plurality of domain controllers 102 include the first domain controller 1021, the second domain controller 1022, and the third domain controller 1023, any one of the plurality of domain controllers 102 may be the first domain controller 1021, the second domain controller 1022, or the third domain controller 1023.

In some embodiments, in a case where the emergency call unit is integrated in the first domain controller 1021, the emergency call unit in the first domain controller 1021 may output the emergency rescue information when the first domain controller receives the collision signal. In a case where the emergency call unit is integrated in the second domain controller 1022, the emergency call unit in the second domain controller 1022 may output the emergency rescue information when the second domain controller 1022 receives the collision signal. In a case where the emergency call unit is integrated in the third domain controller 1023, the emergency call unit in the third domain controller 1023 may output the emergency rescue information when the third domain controller 1023 receives the collision signal.

According to the above technical means, the collision detection unit 101 may send the collision signal to the domain controller 102 connected to the collision detection unit via at least two lines with different communication modes, which realizes the redundant transmission of the collision signal, and improves the possibility that the domain controller 102 receives the collision signal, thus driving the corresponding door lock mechanism 103 to perform the door unlocking and ensuring the safety of the vehicle.

In some embodiments of the present invention, the collision detection unit 101 may be integrated in the domain controller 102. For example, the collision detection unit 101 may be integrated in the first domain controller 1021. The first domain controller 1021 may detect the collision signal. After the collision signal is detected by the collision detection unit 101 in the first domain controller 1021, the collision detection unit 101 may send the collision signal to the second domain controller 1022 and/or the third domain controller 1023, or the collision detection unit 101 may generate the collision unlocking instruction according to the detected collision signal and send the generated collision unlocking instruction to the first door lock calling module 10221 of the second domain controller 1022 and/or the second door lock calling module 10231 of the third domain controller 1023. In addition, the first domain controller 1021 may also send the detected collision signal to the emergency call controller 104, so as to output the emergency call information through the emergency call controller 104.

It should be noted that, in the vehicle distributed domain controller architecture, the plurality of domain controllers 102 provided in the embodiments of the present invention may not only include the first domain controller 1021, the second domain controller 1022 and the third domain controller 1023, that is, may include more than three domain controllers. In addition, without considering the wiring harness cost, the first line, the second line, the third line and the fifth line mentioned in the foregoing embodiments of the present invention may all include more than two lines, and each line can independently transmit the collision signal.

Implementation processes of the embodiments of the present invention in practical application scenarios are introduced below.

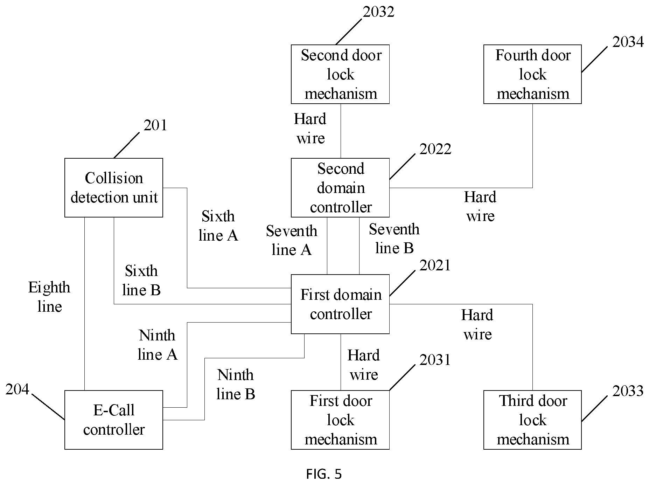

FIG. 5 is a first schematic structural diagram of a collision unlocking and emergency rescue call redundancy system according to an embodiment of the present invention. The system 200 for collision unlocking and emergency call redundancy includes one collision detection unit 201 (corresponding to the "collision detection unit 101" in other embodiments), two domain controllers 202 (corresponding to the "domain controllers 102" in other embodiments), four door lock mechanisms 203 (corresponding to the "door lock mechanisms 103" in other embodiments), and one E-Call controller unit 204 (corresponding to the "emergency call controller 104" in other embodiments).

The collision detection unit 201 is connected to the first domain controller 2021 (corresponding to the "first domain controller 1021" in other embodiments) via a sixth line A and a sixth line B (corresponding to the "at least two first lines" in other embodiments). A seventh line A and a seventh line B (corresponding to the "at least two second lines" in other embodiments) exist between the first domain controller 2021 and the second domain controller 2022 (corresponding to the "second domain controller 1022" in other embodiments). The first domain controller 2021 is connected to the first door lock mechanism 2031 (corresponding to the "first door lock mechanism 1031" in other embodiments) and the third door lock mechanism 2033 (corresponding to the "third door lock mechanism 1033" in other embodiments) respectively via hard wires. The second domain controller 2022 is connected to the second door lock mechanism 2032 (corresponding to the "second door lock mechanism 1032" in other embodiments) and the fourth door lock mechanism 2034 (corresponding to the "fourth door lock mechanism 1034" in other embodiments) respectively via hard wires. The E-Call controller 204 is connected to the collision detection unit 201 via an eighth line, and connected to the first domain controller 2021 via a ninth line A and a ninth line B (corresponding to the "at least two fifth lines" in other embodiments).

When a vehicle collision occurs, the collision detection unit 201 may send the collision signal to the first domain controller 2021 via the sixth line A and the sixth line B, and send the collision signal to the E-Call controller 204 via the eighth line.

It should be noted that the sixth line A and the sixth line B are independent of each other, and the collision signal is sent on the two lines respectively without affecting each other. In a case where the sixth line A is damaged during the collision, the collision detection unit 201 can still transmit the collision signal to the first domain controller 2021 via the sixth line B. In a case where the sixth line B is damaged during the collision, the collision detection unit 201 can still transmit the collision signal to the first domain controller 2021 via the sixth line A. Thus, the redundancy of collision signal transmission can be realized and the system safety can be improved.

After receiving the collision signal, the first domain controller 2021 may drive the first door lock mechanism 2031 and the third door lock mechanism 2033 to perform the collision unlocking via hard wires according to the built-in collision unlocking software. At the same time, after software processing, the received collision signal is sent to the second domain controller 2022 via the seventh line A and the seventh line B, and the collision signal is sent to the E-Call controller 204 via the ninth line A and the ninth line B.

It should be noted that the seventh line A and the seventh line B are independent of each other, and the collision signal is sent on the two lines respectively without affecting each other. In a case where the seventh line A is damaged during the collision, the first domain controller 2021 can still transmit the collision signal to the second domain controller 2022 via the seventh line B. In a case where the seventh line B is damaged during the collision, the first domain controller 2021 can still transmit the collision signal to the second domain controller 2022 via the seventh line A.

Similarly, the ninth line A and the ninth line B are independent of each other, and the collision signal is sent on the two lines respectively without affecting each other. In a case where the ninth line A is damaged during the collision, the first domain controller 2021 can still transmit the collision signal to the E-Call controller 204 via the ninth line B. In a case where the ninth line B is damaged during the collision, the first domain controller 2021 can still transmit the collision signal to the E-Call controller 204 via the ninth line A.

In this way, the redundancy in collision signal transmission is achieved, thus improving the system safety.

After receiving the collision signal, the second domain controller 2022 may drive the second door lock mechanism 2032 and the fourth door lock mechanism 2034 to perform the collision unlocking via hard wires according to the built-in collision unlocking software.

After receiving the collision signal, the E-Call controller 204 may make an emergency rescue call and report information such as the collision time and the vehicle location, thus improving the rescue efficiency.

According to the above system solution, even if the wiring harness is damaged to a certain extent during the collision, the domain controllers can still drive the door lock mechanisms to perform the collision unlocking and make the emergency rescue call, thus improving the system safety.

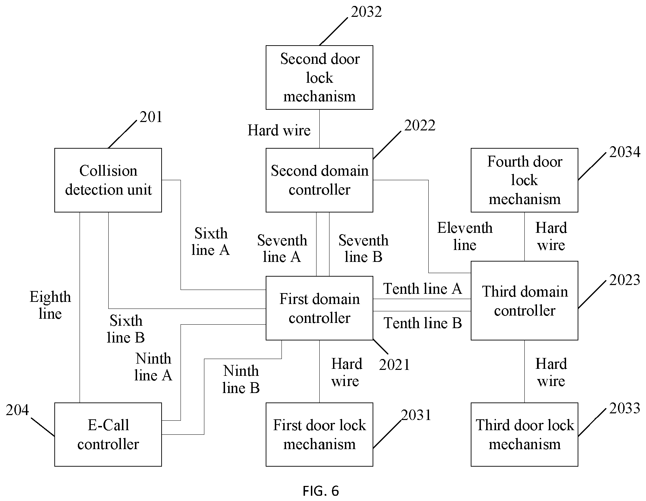

FIG. 6 is a second schematic structural diagram of a collision unlocking and emergency rescue call redundancy system according to an embodiment of the present invention. The collision unlocking and emergency rescue call redundancy system 200 includes a collision detection unit 201, three domain controllers 202, four door lock mechanisms 203, an E-Call controller 204, and other units.

The collision detection unit 201 is connected to the first domain controller 2021 via the sixth line A and the sixth line B. The seventh line A and the seventh line B exist between the first domain controller 2021 and the second domain controller 2022. A tenth line A and a tenth line B (corresponding to the "at least two third lines" in other embodiments) exist between the first domain controller 2021 and the third domain controller 2023 (corresponding to the "third domain controller 1023" in other embodiments). An eleventh line (corresponding to the "fourth line" in other embodiments) exists between the second domain controller 2022 and the third domain controller 2023. The first domain controller 2021 is connected to the first door lock mechanism 2031 via a hard wire. The second domain controller 2022 is connected to the second door lock mechanism 2032 via a hard wire. The third domain controller 2023 is connected to the third door lock mechanism 2033 and the fourth door lock mechanism 2034 via hard wires. The E-Call controller 204 is connected to the collision detection unit 201 via the eighth line, and connected to the first domain controller 2021 via the ninth line A and the ninth line B.

In a case where a vehicle collision occurs, the collision detection unit 201 may send the collision signal to the first domain controller 2021 via the sixth line A and the sixth line B, and send the collision signal to the E-Call controller 204 via the eighth line.

It should be noted that the sixth line A and the sixth line B are independent of each other, and the collision signal is sent on the two lines respectively without affecting each other. In a case where the sixth line A is damaged during the collision, the collision detection unit 201 can still transmit the collision signal to the first domain controller 2021 via the sixth line B. In a case where the sixth line B is damaged during the collision, the collision detection unit 201 can still transmit the collision signal to the first domain controller 2021 via the sixth line A. Thus, the redundancy of collision signal transmission can be realized, and the system safety can be improved.

After receiving the collision signal, the first domain controller 2021 may drive the first door lock mechanism 2031 to perform the collision unlocking via a hard wire according to the built-in collision unlocking software. At the same time, after software processing, the received collision signal is sent to the second domain controller 2022 via the seventh line A and the seventh line B, the received collision signal is sent to the third domain controller 2023 via the tenth line A and the tenth line B, and the collision signal is sent to the E-Call controller 204 via the ninth line A and the ninth line B.

It should be noted that the seventh line A and the seventh line B are independent of each other, and the collision signal is sent on the two lines respectively without affecting each other. In a case where the seventh line A is damaged during the collision, the first domain controller 2021 can still transmit the collision signal to the second domain controller 2022 via the seventh line B. In a case where the seventh line B is damaged during the collision, the first domain controller 2021 can still transmit the collision signal to the second domain controller 2022 via the seventh line A.

Similarly, the tenth line A and the tenth line B are independent of each other, and the collision signal is sent on the two lines respectively without affecting each other. In a case where the tenth line A is damaged during the collision, the first domain controller 2021 can still transmit the collision signal to the third domain controller 2023 via the tenth line B. In a case where the tenth line B is damaged during the collision, the first domain controller 2021 can still transmit the collision signal to the third domain controller 2023 via the tenth line A.

Similarly, the ninth line A and the ninth line B are independent of each other, and the collision signal is sent on the two lines respectively without affecting each other. In a case where the ninth line A is damaged during the collision, the first domain controller 2021 can still transmit the collision signal to the E-Call controller 204 via the ninth line B. In a case where the ninth line B is damaged during the collision, the first domain controller 2021 can still transmit the collision signal to the E-Call controller 204 via the ninth line A.

Furthermore, an eleventh line is further present between the second domain controller 2022 and the third domain controller 2023, which can also be used to transmit the collision signal.

After receiving the collision signal, the second domain controller 2022 can drive the second door lock mechanism 2032 to perform the collision unlocking via a hard wire according to the built-in collision unlocking software. At the same time, after software processing, the received collision signal is sent to the third domain controller 2023 via the eleventh line.

After receiving the collision signal, the third domain controller 2023 can drive the third door lock mechanism 2033 and the fourth door lock mechanism 2034 to perform the collision unlocking via a hard wire according to the built-in collision unlocking software. At the same time, after software processing, the received collision signal is sent to the second domain controller 2022 via the eleventh line.

Under the redundancy guarantee of the eleventh line, in a case where the seventh line A, the seventh line B and the tenth line A are all damaged during the collision, the third domain controller 2023 can still receive the collision signal from the tenth line B, drive the third door lock mechanism 2033 and the fourth door lock mechanism 2034 for unlocking, and then send the collision signal to the second domain controller 2022 via the eleventh line to ensure that the second door lock mechanism 2032 is unlocked. In a case where the seventh line A, the seventh line B and the tenth line B are all damaged during the collision, the third domain controller 2023 can still receive the collision signal from the tenth line A, drive the third door lock mechanism 2033 and the fourth door lock mechanism 2034 for unlocking, and then send the collision signal to the second domain controller 2022 via the eleventh line to ensure that the second door lock mechanism 2032 is unlocked. In a case where the seventh line A, the tenth line A and the tenth line B are all damaged during the collision, the second domain controller 2022 can still receive the collision signal from the seventh line B, drive the second door lock mechanism 2032 for unlocking, and then send the collision signal to the third domain controller 2023 via the eleventh line to ensure that the third door lock mechanism 2033 and the fourth door lock mechanism 2034 are unlocked. In a case where the seventh line B, the tenth line A and the tenth line B are all damaged during the collision, the second domain controller 2022 can still receive the collision signal from the seventh line A, drive the second door lock mechanism 2032 for unlocking, and then send the collision signal to the third domain controller 2023 via the eleventh line to ensure that the third door lock mechanism 2033 and the fourth door lock mechanism 2034 are unlocked.

After receiving the collision signal, the E-Call controller 204 can make an emergency call and report information such as a collision time and a vehicle location, thus improving the rescue efficiency.

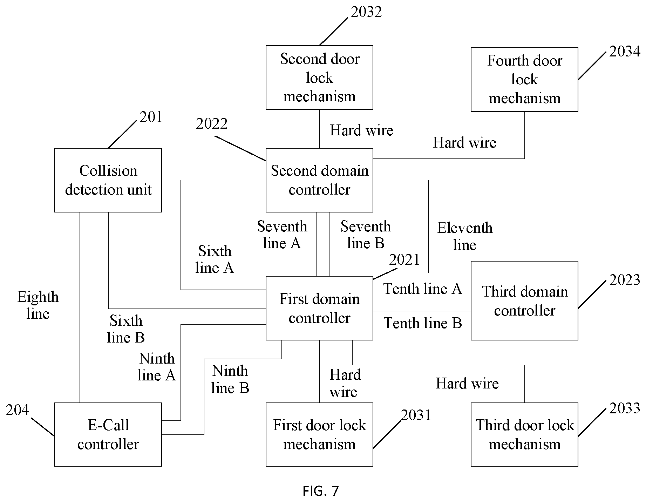

FIG. 7 is a third schematic structural diagram of a collision unlocking and emergency rescue call redundancy system according to an embodiment of the present invention. The collision unlocking and emergency rescue call redundancy system 200 includes a collision detection unit 201, three domain controllers 202, four door lock mechanisms 203, an E-Call controller 204, and other units.

The collision detection unit 201 is connected to the first domain controller 2021 via the sixth line A and the sixth line B. The seventh line A and the seventh line B exist between the first domain controller 2021 and the second domain controller 2022. The tenth line A and the tenth line B exist between the first domain controller 2021 and the third domain controller 2023. The eleventh line exists between the second domain controller 2022 and the third domain controller 2023. The first domain controller 2021 is connected to the first door lock mechanism 2031 and the third door lock mechanism 2033 via hard wires. The second domain controller 2022 is connected to the second door lock mechanism 2032 and the fourth door lock mechanism 2034 respectively via hard wires. The E-Call controller 204 is connected to the collision detection unit 201 via the eighth line, and connected to the first domain controller 2021 via the ninth line A and the ninth line B.

When a vehicle collision occurs, the collision detection unit 201 may send the collision signal to the first domain controller 2021 via the sixth line A and the sixth line B, and send the collision signal to the E-Call controller 204 via the eighth line.

It should be noted that the sixth line A and the sixth line B are independent of each other, and the collision signal is sent on the two lines respectively without affecting each other. In a case where the sixth line A is damaged during the collision, the collision detection unit 201 can still transmit the collision signal to the first domain controller 2021 via the sixth line B. In a case where the sixth line B is damaged during the collision, the collision detection unit 201 can still transmit the collision signal to the first domain controller 2021 via the sixth line A. Thus, the redundancy of collision signal transmission can be realized and the system safety can be improved.

After receiving the collision signal, the first domain controller 2021 may drive the first door lock mechanism 2031 and the third door lock mechanism 2033 to perform the collision unlocking via hard wires according to the built-in collision unlocking software. At the same time, after software processing, the received collision signal is sent to the second domain controller 2022 via the seventh line A and the seventh line B, sent to the third domain controller 2023 via the tenth line A and the tenth line B, and sent to the E-Call controller 204 via the ninth line A and the ninth line B.

It should be noted that the seventh line A and the seventh line B are independent of each other, and the collision signal is sent on the two lines respectively without affecting each other. In a case where the seventh line A is damaged during the collision, the first domain controller 2021 can still transmit the collision signal to the second domain controller 2022 via the eighth line B. In a case where the eighth line B is damaged during the collision, the first domain controller 2021 can still transmit the collision signal to the second domain controller 2022 via the eighth line A.

Similarly, the tenth line A and the tenth line B are independent of each other, and the collision signal is sent on the two lines respectively without affecting each other. In a case where the tenth line A is damaged during the collision, the first domain controller 2021 can still transmit the collision signal to the third domain controller 2023 via the tenth line B. In a case where the tenth line B is damaged during the collision, the first domain controller 2021 can still transmit the collision signal to the third domain controller 2023 via the tenth line A.

Similarly, the ninth line A and the ninth line B are independent of each other, and the collision signal is sent on the two lines respectively without affecting each other. In a case where the ninth line A is damaged during the collision, the first domain controller 2021 can still transmit the collision signal to the E-Call controller 204 via the ninth line B. In a case where the ninth line B is damaged during the collision, the first domain controller 2021 can still transmit the collision signal to the E-Call controller 204 via the ninth line A.

In addition, an eleventh line also exists between the second domain controller 2022 and the third domain controller 2023, and this line can also be used to transmit the collision signal.

After receiving the collision signal, the second domain controller 2022 may drive the second door lock mechanism 2032 and the fourth door lock mechanism 2034 to perform the collision unlocking via hard wires according to the built-in collision unlocking software. At the same time, after software processing, the received collision signal is sent to the third domain controller 2023 via the eleventh line.

After software processing, the third domain controller 2023 sends the received collision signal to the second domain controller 2022 via the eleventh line.

Under the redundancy guarantee of the eleventh line, in a case where the seventh line A, the seventh line B and the tenth line A are all damaged during the collision, the third domain controller 2023 can still receive the collision signal from the tenth line B, and then send the collision signal to the second domain controller 2022 via the eleventh line to ensure that the second door lock mechanism 2032 and the fourth door lock mechanism 2034 are unlocked. In a case where the seventh line A, the seventh line B and the tenth line B are all damaged during the collision, the third domain controller 2023 can still receive the collision signal from the tenth line A, and then send the collision signal to the second domain controller 2022 via the eleventh line to ensure that the second door lock mechanism 2032 and the fourth door lock mechanism 2034 are unlocked.

After receiving the collision signal, the E-Call controller 204 may make an emergency rescue call and report information such as the collision time and the vehicle location, thus improving the rescue efficiency.

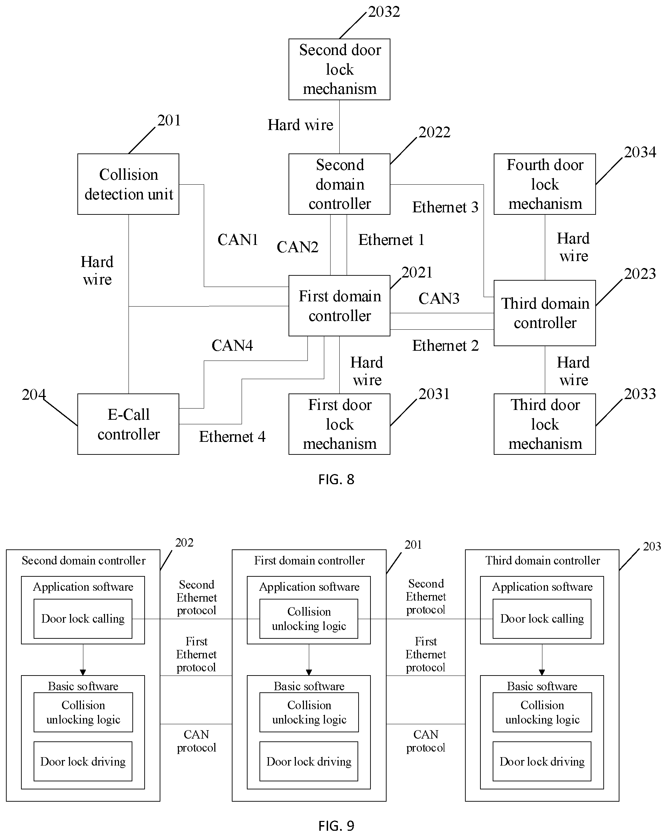

FIG. 8 is a fourth schematic structural diagram of a collision unlocking and emergency rescue call redundancy system according to an embodiment of the present invention. The collision unlocking and emergency rescue call redundancy system 200 includes a collision detection unit 201, three domain controllers 202, four door lock mechanisms 203, an E-Call controller 204 and other units, and the communication forms between the units are also clearly defined.

The collision detection unit 201 is connected to the first domain controller 2021 via a hard wire and a CAN1. The first domain controller 2021 is connected to the second domain controller 2022 via a CAN2 and an Ethernet 1. The first domain controller 2021 is connected to the third domain controller 2023 via a CAN3 and an Ethernet 2. The second domain controller 2022 is connected to the third domain controller 2023 via an Ethernet 3. The first domain controller 2021 is connected to the first door lock mechanism 2031 via a hard wire. The second domain controller 2022 is connected to the second door lock mechanism 2032 via a hard wire. The third domain controller 2023 is connected to the third door lock mechanism 2033 and the fourth door lock mechanism 2034 respectively via hard wires. The E-Call controller 204 is connected to the collision detection unit 201 via a hard wire, and connected to the first domain controller 2021 via a CAN4 and an Ethernet 4.

When a vehicle collision occurs, the collision detection unit 201 may send the collision signal to the first domain controller 2021 via the hard wire and the CAN1, and send the collision signal to the E-Call controller 204 via the hard wire.

It should be noted that the hard wire and the CAN1 are independent of each other, and the collision signal is sent on the two lines respectively without affecting each other. In a case where the hard wire is damaged during the collision, the collision detection unit 201 can still transmit the collision signal to the first domain controller 2021 via the CAN1. In a case where the CAN1 is damaged during the collision, the collision detection unit 201 can still transmit the collision signal to the first domain controller 2021 via the hard wire. Thus, the redundancy of collision signal transmission can be realized and the system safety can be improved.

After receiving the collision signal, the first domain controller 2021 may drive the first door lock mechanism 2031 to perform the collision unlocking via the hard wire according to the built-in collision unlocking software. At the same time, after software processing, the received collision signal is sent to the second domain controller 2022 via the CAN2 and the Ethernet 1, sent to the third domain controller 2023 via the CAN3 and the Ethernet 2, and sent to the E-Call controller 204 via the CAN4 and the Ethernet 4.

It should be noted that the CAN2 and the Ethernet 1 are independent of each other, and the collision signal is sent on the two lines respectively without affecting each other. In a case where the CAN2 is damaged during the collision, the first domain controller 2021 can still transmit the collision signal to the second domain controller 2022 via the Ethernet 1. In a case where the Ethernet 1 is damaged during the collision, the first domain controller 2021 can still transmit the collision signal to the second domain controller 2022 via the CAN2.

Similarly, the CAN3 and the Ethernet 2 are independent of each other, and the collision signal is sent on the two lines respectively without affecting each other. In a case where the CAN3 is damaged during the collision, the first domain controller 2021 can still transmit the collision signal to the third domain controller 2023 via the Ethernet 2. In a case where the Ethernet 2 is damaged during the collision, the first domain controller 2021 can still transmit the collision signal to the third domain controller 2023 via the CAN3.

Similarly, the CAN4 and the Ethernet 4 are independent of each other, and the collision signal is sent on the two lines respectively without affecting each other. In a case where the CAN4 is damaged during the collision, the first domain controller 2021 can still transmit the collision signal to the E-Call controller 204 via the Ethernet 4. In a case where Ethernet 4 is damaged during the collision, the first domain controller 2021 can still transmit the collision signal to the E-Call controller 204 via the CAN4.

Furthermore, the Ethernet 3 also exists between the second domain controller 2022 and the third domain controller 2023, and this line can also transmit the collision signal.

After receiving the collision signal, the second domain controller 2022 may drive the second door lock mechanism 2032 to perform the collision unlocking via a hard wire according to the built-in collision unlocking software. At the same time, after software processing, the received collision signal is sent to the third domain controller 2023 via the Ethernet 3.

After receiving the collision signal, the third domain controller 2023 may drive the third door lock mechanism 2033 and the fourth door lock mechanism 2034 to perform the collision unlocking via hard wires according to the built-in collision unlocking software. At the same time, after software processing, the received collision signal is sent to the second domain controller 2022 via the Ethernet 3.

Under the redundancy guarantee of Ethernet 3, in a case where the CAN2, the Ethernet 1 and the CAN3 are all damaged during the collision, the third domain controller 2023 can still receive the collision signal from the Ethernet 2, drive the third door lock mechanism 2033 and the fourth door lock mechanism 2034 for unlocking, and then send the collision signal to the second domain controller 2022 via the Ethernet 3 to ensure that the second door lock mechanism 2032 is unlocked. In a case where the CAN2, the Ethernet 1 and the Ethernet 2 are all damaged during the collision, the third domain controller 2023 can still receive the collision signal from the CAN3, drive the third door lock mechanism 2033 and the fourth door lock mechanism 2034 for unlocking, and then send the collision signal to the second domain controller 2022 via the Ethernet 3 to ensure that the second door lock mechanism 2032 is unlocked. In a case where the CAN2, the CAN3 and the Ethernet 2 are all damaged during the collision, the second domain controller 2022 can still receive the collision signal from the Ethernet 1, drive the second door lock mechanism 2032 for unlocking, and then send the collision signal to the third domain controller 2023 via the Ethernet 3 to ensure that the third door lock mechanism 2033 and the fourth door lock mechanism 2034 are unlocked. In a case where the Ethernet 1, the CAN3 and the Ethernet 2 are all damaged during the collision, the second domain controller 2022 can still receive the collision signal from the CAN2, drive the second door lock mechanism 2032 for unlocking, and then send the collision signal to the third domain controller 2023 via Ethernet 3 to ensure that the third door lock mechanism 2033 and the fourth door lock mechanism 2034 are unlocked.

After receiving the collision signal, the E-Call controller 204 may make an emergency rescue call and report information such as the collision time and the vehicle location, thus improving the rescue efficiency.

FIG. 9 is a schematic diagram of collision signal transmission and calling between domain controllers according to an embodiment of the present invention. In a case where a collision occurs, the first domain controller 2021, the second domain controller 2022 and the third domain controller 2023 may transmit the collision signal through the CAN protocol and the first Ethernet communication protocol, and then each domain controller drives unlocking independently through software integrated in the basic software. In addition, after receiving the collision signal, the first domain controller 2021 not only forwards the collision signal to the second domain controller 2022 and the third domain controller 2023, but also directly calls the software of other controllers connected with the door lock mechanisms to perform the unlocking through the second Ethernet communication protocol (the instructions are sent from the collision unlocking logic module in the application software of the first domain controller 2021 to the door lock calling module of the second domain controller 1022 (corresponding to "the first door lock calling module 10221" in other embodiments) and the door lock calling module of the third domain controller 1023 (corresponding to "the second door lock calling module 10231" in other embodiments). After receiving the calling instructions, the door lock calling module of the second domain controller 1022 and the door lock calling module of the third domain controller 1023 may transmit the instructions to the collision unlocking logic modules in their respective basic software, and drive the corresponding door lock mechanisms to realize the door unlocking through their respective door lock driving modules). That is, the collision signal is forwarded through the first Ethernet communication protocol, and the interface is called to drive the unlocking through the second Ethernet communication protocol. These two Ethernet communication protocols are also independent of each other and redundant with each other. In a case where the first communication protocol stack of the controller fails during the collision, the second protocol can still ensure unlocking. In a case where the second communication protocol stack of the controller fails during the collision, the first protocol can still ensure unlocking. The above Ethernet protocols may be Scalable Service-Oriented Middleware over IP (SOME-IP), Data Distribution Service (DDS), etc.

The collision unlocking and emergency rescue call redundancy system provided by the embodiments of the present invention improves the possibility of successfully unlocking the vehicle door and making an emergency rescue call when a vehicle collision occurs by using multiline redundancy and multi-protocol redundancy between controllers. Even if part of the wiring harness is damaged during the collision or even part of the controllers is affected by the collision, it can ensure that the vehicle smoothly unlocks the four door locks and makes an emergency rescue call, thus ensuring the escape of vehicle occupants and the timely implementation of off-vehicle rescue, and greatly improving the vehicle safety.

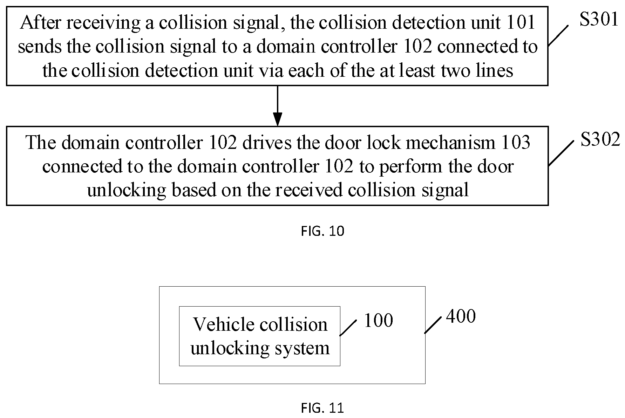

An embodiment of the present invention provides a vehicle collision unlocking method, which is applied to the vehicle collision unlocking system 100 provided by the embodiment of the present invention. The vehicle collision unlocking system 100 includes a collision detection unit 101, a plurality of domain controllers 102, and a plurality of door lock mechanisms 103. As shown in FIG. 10, the vehicle collision unlocking method includes the following steps S301 and S302.

In step S301, after receiving a collision signal, the collision detection unit 101 sends the collision signal to a domain controller 102 connected to the collision detection unit via each of the at least two lines.

It should be noted that each of the at least two lines corresponds to a different communication mode. Each line may be a hard wire, an Ethernet, a CAN bus or other types of lines, and the domain controller 102 is any one of the plurality of domain controllers.

In some embodiments, in a case where a vehicle collision occurs, the collision detection unit 101 may detect the collision signal, which is used to indicate that a collision event has occurred to the vehicle currently. After receiving the collision signal, the collision detection unit 101 may send the collision signal to the domain controller 102 connected thereto via each line respectively.

In some embodiments, there may be two or more lines between the collision detection unit 101 and the domain controller 102 connected to the collision detection unit 101. After detecting the collision signal, the collision detection unit 101 may send the collision signal to the corresponding domain controller 102 simultaneously via each line, and each line does not affect each other. In practice, the time when the collision signal reaches the domain controller 102 may be different due to different communication modes of different lines.

In step S302, the domain controller 102 drives the door lock mechanism 103 connected to the domain controller 102 to perform the door unlocking based on the received collision signal.

In some embodiments, there may be one or more door lock mechanism 103 connected to the domain controller 102. In a case where there are a plurality of door lock mechanisms connected to the domain controller 102, the domain controller 102 may transmit the collision signal to each door lock mechanism 103 simultaneously after receiving the collision signal.

In the vehicle collision unlocking method provided by the embodiment of the present invention, the collision detection unit 101 sends the collision signal to the domain controller 102 connected to the collision detection unit via at least two lines respectively, so that even if part of the lines between the collision detection unit and the domain controller 102 fails, the successful transmission of the collision signal can be realized, the possibility that the domain controller 102 receives the collision signal is improved, and further, the domain controller 102 can drive the corresponding door lock mechanism 103 based on the received collision signal, thus improving the safety of the vehicle.

In some embodiments, in a case where the vehicle collision unlocking system 100 includes an emergency call controller 104, after detecting the collision signal, the collision detection unit 101 may also send the collision signal to the emergency call controller 104 connected to the collision detection unit 101. After receiving the collision signal sent by the collision detection unit 101, the emergency call controller 104 outputs emergency rescue information based on the collision signal.

In some embodiments, in a case where the plurality of domain controllers 102 include a first domain controller 1021, and the first domain controller 1021 is connected to the collision detection unit 103 via at least two first lines respectively, after detecting the collision signal, the collision detection unit 101 may send the collision signal to the first domain controller 1021 via each of the first lines, so that the first domain controller 1021 can drive the door lock mechanism 103 connected to the first domain controller 1021 to perform the door unlocking based on the collision signal.

In some embodiments, in a case where the plurality of domain controllers 102 further include a second domain controller 1022, and the first domain controller 1021 is connected to the second domain controller 1022 via at least two second lines respectively, after receiving the collision signal, the first domain controller 1021 may send the received collision signal to the second domain controller 1022 via each of the second lines, so that the second domain controller 1022 can drive the door lock mechanism 103 connected to the second domain controller 1022 to perform the door unlocking based on the collision signal.

In some embodiments, in a case where the plurality of door lock mechanisms 103 include a first door lock mechanism 1031, a second door lock mechanism 1032, a third door lock mechanism 1033, and a fourth door lock mechanism 1034, the first domain controller 1021 is connected to the first door lock mechanism 1031 and the second door lock mechanism 1032 respectively, and the second domain controller 1022 is connected to the third door lock mechanism 1033 and the fourth door lock mechanism 1034 respectively. After receiving the collision signal, the first domain controller 1021 may drive the first door lock mechanism 1031 and the second door lock mechanism 1032 to perform the door unlocking based on the collision signal. After receiving the collision signal, the second domain controller 1021 may drive the third door lock mechanism 1033 and the fourth door lock mechanism 1034 to perform door unlocking based on the collision signal.

In some embodiments, in a case where the plurality of domain controllers 102 further include a third domain controller 1023, and the third domain controller 1023 is connected to the first domain controller 1021 via at least two third lines respectively, after receiving the collision signal, the first domain controller 1021 may send the received collision signal to the third domain controller 1023 via each of the third lines, so that the third domain controller 1023 can drive the door lock mechanism 103 connected to the third domain controller 1023 to perform the door unlocking based on the collision signal.

In some embodiments, in a case where the third domain controller 1023 is connected to the second domain controller 1022 via a fourth line, the third domain controller 1023 may send the received collision signal to the second domain controller 1022 via the fourth line, so that the second domain controller 1022 can drive the door lock mechanism 103 connected to the second domain controller 1022 to perform the door unlocking based on the collision signal. Alternatively, the third domain controller 1022 may receive the collision signal sent by the second domain controller 1022 via the fourth line, so that the third domain controller 1023 can drive the door lock mechanism 103 connected to the third domain controller 1023 to perform the door unlocking based on the collision signal.

In some embodiments, in a case where the plurality of door lock mechanisms 103 include a first door lock mechanism 1031, a second door lock mechanism 1032, a third door lock mechanism 1033, and a fourth door lock mechanism 1034, the first domain controller 1021 is connected to the first door lock mechanism 1031, the second domain controller 1022 is connected to the second door lock mechanism 1032, and the third domain controller 1023 is connected to the third door lock mechanism 1033 and the fourth door lock mechanism 1034 respectively. After receiving the collision signal, the first domain controller 1021 may drive the first door lock mechanism 1031 to perform the door unlocking based on the collision signal. After receiving the collision signal, the second domain controller 1022 may drive the second door lock mechanism 1032 to perform the door unlocking based on the collision signal. After receiving the collision signal, the third domain controller 1023 may drive the third door lock mechanism 1033 and the fourth door lock mechanism 1034 to perform the door unlocking based on the collision signal.

In some embodiments, in a case where the first domain controller 1021 is connected to the emergency call controller 104 via at least two fifth lines respectively, after receiving the collision signal, the first domain controller 1021 may send the collision signal to the emergency call controller 104 via each of the fifth lines, so that the emergency call controller 104 can output the emergency rescue information based on the collision signal.

In some embodiments, in a case where any one of the plurality of domain controllers 102 includes an emergency call unit, after the domain controller receives the collision signal, the emergency call unit may output emergency rescue information based on the received collision signal.

In the vehicle collision unlocking method provided by the embodiment of the present invention, the redundant transmission of the collision signal between the collision detection unit 101 and the domain controllers 102, between the domain controllers 102, and between the domain controllers 102 and the emergency call controller 104 improves the possibility of successfully unlocking the vehicle door and outputting emergency rescue information when a vehicle collision occurs, thus improving the safety of the vehicle.

It should be noted that the description of the vehicle collision unlocking method in the embodiment of the present invention is similar to the description of the corresponding system embodiment above, and has similar beneficial effects to the system embodiment, which will not be repeated. For the technical details not disclosed in the method embodiment, reference can be made to the description of the system embodiment of the present invention for understanding.

An embodiment of the present invention provides a vehicle. As shown in FIG. 11, the vehicle 400 includes the vehicle collision unlocking system 100 provided by the embodiment of the present invention. By including the above vehicle collision unlocking system 100, the possibility of successfully unlocking the vehicle door when a collision occurs can be improved, and the vehicle safety can be improved.

It should be understood that the term "some embodiments" mentioned throughout the specification means that a specific feature, structure or characteristic related to the embodiment is included in at least one embodiment of the present invention. Therefore, the appearances of the expression "in some embodiments" in various places throughout the specification do not necessarily all refer to the same embodiment. Furthermore, these specific features, structures or characteristics may be combined in any suitable manner in one or more embodiments. It should be understood that, in various embodiments of the present invention, the sequence numbers of the above processes do not imply an execution order. The execution order of each process should be determined by its function and inherent logic, and shall not constitute any limitation on the implementation process of the embodiments of the present invention. The above sequence numbers of the embodiments of the present invention are only for description and do not represent the advantages or disadvantages of the embodiments.

It is to be noted that terms "include" and "comprise" or any other variant thereof is intended to cover nonexclusive inclusions herein, such that a process, method, object or device including a series of components not only includes those components but also includes other components which are not clearly listed, or further includes components intrinsic to the process, the method, the object or the device. Under the condition of no more limitations, a component defined by the statement "including a/an..." does not exclude existence of the same other components in a process, method, object or device including the component.

In the several embodiments provided by the present invention, it should be understood that the disclosed systems and methods may be implemented in other ways. The device embodiments described above are merely illustrative. For example, the division of the units is only a logical function division, and there may be other division manners in actual implementation. For example, multiple units or components may be combined, or integrated into another system, or some features may be omitted or not executed. In addition, the coupling, direct coupling or communication connection between the components shown or discussed may be indirect coupling or communication connection through some interfaces, devices or units, and may be in electrical, mechanical or other forms.

The units described above as separate components may or may not be physically separated, and the components shown as units may or may not be physical units. They may be located in one place or distributed on multiple network units. Some or all of the units may be selected according to actual needs to achieve the purpose of the solution of the embodiments.

In addition, the functional units in the embodiment of the present invention may be integrated into one processing unit, or each unit may exist alone as a separate unit, or two or more units may be integrated into one unit. The above integrated units may be implemented in the form of hardware, or in the form of hardware plus software functional units.

The above are only specific embodiments of the present invention, but the protection scope of the present invention is not limited thereto. Any person skilled in the art can easily conceive of modifications or substitutions within the technical scope disclosed by the present invention, and all such modifications or substitutions shall fall within the protection scope of the present invention. Therefore, the protection scope of the present invention shall be subject to the protection scope of the claims.

## Claims

1. A vehicle collision unlocking system, comprising: a collision detection unit, a plurality of domain controllers, and a plurality of door lock mechanisms,
wherein the collision detection unit is connected to any one of the plurality of domain controllers via at least two lines, the collision detection unit is configured to obtain a collision signal and send the collision signal to the domain controller connected to the collision detection unit via each of the at least two lines, and each of the at least two lines corresponds to a different communication mode; and
any one of the plurality of domain controllers is connected to at least one door lock mechanism, and is configured to drive the at least one door lock mechanism connected to the domain controller to perform door unlocking based on the received collision signal.

2. The vehicle collision unlocking system according to claim 1, wherein each of the plurality of domain controllers comprises a respective collision unlocking module, and the domain controller is configured to, after receiving the collision signal, drive the corresponding at least one door lock mechanism to perform the door unlocking via the collision unlocking module of the domain controller.

3. The vehicle collision unlocking system according to claim 1 or 2, wherein the plurality of domain controllers comprise a first domain controller;
the first domain controller is connected to the collision detection unit via at least two first lines; and
the collision detection unit is configured to send the collision signal to the first domain controller via each of the at least two first lines, and each of the at least two first lines corresponds to a different communication mode.

4. The vehicle collision unlocking system according to claim 3, wherein the plurality of domain controllers further comprise a second domain controller;
the first domain controller is connected to the second domain controller via at least two second lines;
the first domain controller is configured to perform at least one of sending the received collision signal to the second domain controller via each of the at least two second lines, or sending a collision unlocking instruction to the second domain controller via each of the at least two second lines; and
the collision unlocking instruction is generated by the first domain controller based on the collision signal, the collision signal and the collision unlocking instruction are sent via different second lines, and each of the at least two second lines corresponds to a different communication mode.

5. The vehicle collision unlocking system according to claim 4, wherein the first domain controller comprises a collision unlocking logic module, and the second domain controller comprises a first door lock calling module and a first collision unlocking module;
the collision unlocking logic module is configured to generate the collision unlocking instruction according to the received collision signal, and send the collision unlocking instruction to the first door lock calling module via the at least two second lines; and
the first door lock calling module is configured to call the first collision unlocking module based on the received collision unlocking instruction to drive a door lock mechanism connected to the second domain controller to perform the door unlocking.

6. The vehicle collision unlocking system according to claim 4, wherein the second domain controller comprises a first collision unlocking module, and the second domain controller is configured to, after receiving the collision signal, drive a door lock mechanism connected to the second domain controller to perform the door unlocking via the first collision unlocking module.

7. The vehicle collision unlocking system according to claim 4, wherein
the first domain controller is connected to at least one door lock mechanism of the plurality of door lock mechanisms, and is configured to drive, based on the received collision signal, the at least one door lock mechanism to perform the door unlocking; the second domain controller is connected to door lock mechanisms other than the at least one door lock mechanism connected to the first domain controller, and is configured to drive, based on the received collision signal, the door lock mechanisms other than the at least one door lock mechanism connected to the first domain controller to perform the door unlocking; or
the second domain controller is connected to each of the plurality of door lock mechanisms, and is configured to drive, based on the received collision signal, the plurality of door lock mechanisms to perform the door unlocking.

8. The vehicle collision unlocking system according to claim 4, wherein the plurality of domain controllers further comprise a third domain controller;
the third domain controller is connected to the first domain controller via at least two third lines;
the first domain controller is configured to perform at least one of sending the received collision signal to the third domain controller via each of the at least two third lines, or sending the collision unlocking instruction to the third domain controller via each of the at least two third lines, the collision signal and the collision unlocking instruction are sent via different third lines, and each of the at least two third lines corresponds to a different communication mode.

9. The vehicle collision unlocking system according to claim 8, wherein the first domain controller comprises a collision unlocking logic module, and the third domain controller comprises a second door lock calling module and a second collision unlocking module;
the collision unlocking logic module is configured to generate the collision unlocking instruction according to the received collision signal, and send the collision unlocking instruction to the second door lock calling module via the at least two third lines; and
the second door lock calling module is configured to call the second collision unlocking module based on the received collision unlocking instruction to drive a door lock mechanism connected to the third domain controller to perform the door unlocking.

10. The vehicle collision unlocking system according to claim 8, wherein the third domain controller comprises a second collision unlocking module, and the third domain controller is configured to, after receiving the collision signal, drive a door lock mechanism connected to the third domain controller to perform the door unlocking via the second collision unlocking module.

11. The vehicle collision unlocking system according to claim 8, wherein the third domain controller is connected to the second domain controller via a fourth line, and the second domain controller and the third domain controller are configured to transmit the collision signal via the fourth line.

12. The vehicle collision unlocking system according to claim 11, wherein the first domain controller is connected to at least two of the plurality of door lock mechanisms, or the second domain controller is connected to at least two of the plurality of door lock mechanisms, or the third domain controller is connected to at least two of the plurality of door lock mechanisms.

13. The vehicle collision unlocking system according to claim 3, further comprising an emergency call controller,
wherein the emergency call controller is connected to the collision detection unit, and the emergency call controller is configured to output, after receiving the collision signal sent by the collision detection unit, emergency rescue information based on the collision signal.

14. The vehicle collision unlocking system according to claim 13, wherein the first domain controller is connected to the emergency call controller via at least two fifth lines; and
the first domain controller is configured to send the received collision signal to the emergency call controller via each of the at least two fifth lines, and each of the at least two fifth lines corresponds to a different communication mode.

15. The vehicle collision unlocking system according to any one of claims 1 to 14, wherein any one of the plurality of domain controllers comprises an emergency call unit, and the emergency call unit is configured to output emergency rescue information based on the collision signal after any one of the plurality of domain controllers receives the collision signal.

16. A vehicle collision unlocking method, applied to the vehicle collision unlocking system according to any one of claims 1 to 15, comprising:
sending, by the collision detection unit, the collision signal to the domain controller connected to the collision detection unit via each of the at least two lines after receiving the collision signal,
wherein each of the at least two lines corresponds to a different communication mode, and the domain controller is any one of the plurality of domain controllers; and
driving, by the domain controller based on the received collision signal, a door lock mechanism connected to the domain controller to perform the door unlocking.

17. A vehicle, comprising the vehicle collision unlocking system according to any one of claims 1 to 15.
